# EUROPEAN PATENT SPECIFICATION

(11) **EP 1 403 480 B1**
(45) Date of publication and mention of the grant of the patent: **08.08.2007**
(21) Application number: 03003189.2
(22) Date of filing: 19.02.2003
(51) Int. Cl.: F01P 7/16, F02P 5/15, F02D 41/02

(54) **Control system for internal combustion engine with catalyst for purifying exhaust gas**
Steuersystem für Verbrennungsmotor mit Katalysator zur Reinigung von Abgasen
Système de commande avec catalyseur pour purifier des gaz d'échappement

(30) Priority: 24.09.2002 JP 2002277379
(43) Date of publication of application: 31.03.2004
(73) Proprietor: Hitachi Ltd., Tokyo 100-8280 (JP)
(72) Inventor: Iihoshi, Yoichi, Hitachi, Ltd. Intellectual Property Group, Chiyoda-ku, Tokyo 100-8220 (JP); Miyazaki, Taizo, Hitachi, Ltd. Intellectual Property Group, Chiyoda-ku, Tokyo 100-8220 (JP)
(74) Representative: Beetz & Partner

(56) References cited:
- EP-A- 0 557 113
- EP-A- 0 856 655
- EP-A- 1 134 367
- EP-A- 1 186 752
- DE-A- 4 142 120
- US-A- 3 855 975
- US-A- 4 005 693

## Description

### BACKGROUND OF THE INVENTION

The present invention relates to a control system for an internal combustion engine, which incorporates catalyst for purifying exhaust gas, and in particular to a technology of fast activation of catalyst for purification of exhaust gas from an internal combustion engine, by controlling an engine cooling system or the like.

### RELATED ART

As disclosed in, for example, JP-A-2000-34584 or JP-A-2000-45843, there have been well-known many technologies of inhibiting radiation of heat from an engine to cooling water during a cold start in order to shorten the time of warm-up of the engine.

For example, the JP-A-2000-34584 discloses such a technology that the supply of cooling water is controlled in accordance with a temperature of a combustion chamber during operation of an engine so as to promote warm-up of the engine while the temperature of the wall surface of a combustion chamber, which correlates to a quantity of emergence of unburned HC components during a cold start is raised along an optimum temperature rising characteristic.
Specifically, the cooling water is held in a reservoir tank when the wall temperature T of the combustion chamber during engine operation is lower than a first reference wall temperature T1, but the cooling water is displaced into a cooling water jacket of the engine when it is higher than T1. After the above-mentioned displacement of the cooling water is completed, the circulation if the cooling water is started.

Further, the JP-A-2000-45843 discloses a technology of retarding the ignition timing in an unwarmed-up condition so as to abruptly increase the exhaust temperature, exceeding a temperature of activation of catalyst for purification of exhaust gas so as to aim at promoting warm-up of catalyst for purification of exhaust gas in order to allow the catalyst to exhibit its purification characteristic in a short period.

Neither such a control technology that the warm-up of an engine and the warm-up of catalyst for purification of exhaust gas are associated with each other so as to carry out rational control, nor such a technology of short-time warm-up of an internal combustion engine that the control of a cooling water system and the control of combustion are combined with each other has not yet been built up in success.

In US 3,855,975 a warming-up apparatus is disclosed that is adapted for warming up an internal combustion engine.

In EP 1 186 752 a valve control system for operating an automotive engine during cold-starts is disclosed. A cold-start "negative" valve-overlap (NVO) system is described wherein the intake valve opens after the exhaust valve has closed during the piston intake stroke, creating a high vacuum in the cylinder. At the end of the NVO period, an increased turbulence in the cylinder enhances mixing of the charge and improves its combustion stability.

In DE 41 42 120 a cooling water pump is disclosed with a ring being positioned in an opening between a water conduct and a water pump housing. Based on the coolant temperature and a throttle opening the pump throughput of the coolant pump is adjusted on cold starting to reduce warm-up time and pollutant emission with earlier attainment of efficient catalytic conversion. The adjustment is achieved by axially moving the ring in the opening.

US 4,005,693 relates to a warming-up system for internal combustion engines incorporating cooling water for cooling the engine, a circulation passage for the cooling water, a water pump for controlling a fluoride of the cooling water and catalyst for purifying exhaust gas from the engine.

In JP 571 73520 a system is disclosed in which cooling water temperature signal of an engine and simultaneously a knocking vibration signal are inputted to a control device. If knocking occurs the amplitude of a vibration signal of a prescribed frequency is increased over the output of a level setter circuit. Then - inter alia - the rotary speed of a motor for a water pump is increased and thus the circulation of cooling water. In this way an abnormal rise of temperature in an engine can be prevented by anticipatively controlling the pump so that its speed is increased at a knocking in the engine.

### BRIEF SUMMARY OF THE INVENTION

An object of the present invention is to provide a control system for an internal combustion engine, which can rationally control the warm-up of the internal combustion engine and the warm-up of catalyst in the order of priority during a cold start.

In order to attain the above object, the present invention provides a control system for an internal combustion engine according to the independent claim. The dependent claims relate to preferred embodiments.

To the end, there is provided a control system for an internal combustion engine incorporating catalyst for purifying exhaust gas therefrom, which can control, during a cold start, a heat (cooling loss) transmitted from combustion gas to an engine block and a heat (heat radiation for cooling) transmitted from the engine block to engine cooling water, in order to aim for early warm-up of the catalyst. Further, there is provided a system for controlling the cooling loss and the heat radiation for cooling, so that the warm-up of the catalyst is preferential to the warm-up of the internal combustion engine while the engine and the catalyst are warmed up in a short time.

The control of the cooling loss is made by controlling, for example, the ignition timing while the control of the heat radiation for cooling is made by controlling the flow rate of cooling water through the intermediary of a water pump. That is, in such a case that the temperature of the catalyst has not yet risen up to its activation temperature, retardation control of the ignition timing is made so as to decrease the cooling loss, and as well, control is made such that the flow rate of cooling water is decreased to zero or a value smaller than a normal value so as to decrease the heat radiation for cooling.

The above-mentioned control is carried out being based at least upon a temperature of engine cooling water or a temperature of the catalyst. These temperatures are detected by a water temperature sensor and/or a catalyst temperature sensor. Further, the temperature of the catalyst can be estimated or computed from an engine speed, a load, an ignition timing, an EGR quantity, an intake air quantity and/or an intake air temperature, a distance from the engine to the catalyst, the thermal capacity (a number of cells or a volume) of the catalyst and/or the like.

Further, there is proposed a control system for controlling the engine in such a way that the heat radiation for cooling can be minimized during activation control of catalyst until the catalyst is activated while the cooling loss is maximized during control of warm-up of the engine until the engine is warmed up after the activation of the catalyst.

With the above-mentioned control, the engine and the catalyst can be warmed up in a short time, thereby it is possible to restrain the environmental contamination caused by exhaust gas and to enhance the fuel economy.

Further, the ignition timing is retarded from the normal timing if the catalyst temperature is lower than its activation temperature while the ignition timing is advanced from the normal timing until the temperature of cooling water rises up to a temperature at which the warm-up of the engine is completed, after the catalyst temperature rises up to its activation temperature.

With the configuration as stated above, not only the activation of the catalyst but also the warm-up of the engine can be promoted. Further, the provision of a knock sensor for detecting knocking of the internal combustion engine is desirable so that the ignition timing can be retarded when the knock sensor detects a knock during ignition timing control. Further, the flow rate of the cooling water by the water pump can be increased in order to promote the warm-up of the internal combustion engine in a sure and safe manner.

Further, there is provided a control system for an internal combustion engine having a turbocharger for supercharging intake air in the internal combustion engine and a cooling passage for cooling the turbocharger. The control system incorporates a valve for controlling a flow rate of cooling water flowing through the cooling passage, in order to control the valve so as to reduce the flow rate of the cooling water flowing through the cooling passage if the temperature of catalyst is not greater than an activation temperature thereof, thereby it is possible to promote the activation of the catalyst.

Further, there is provided a control system for an internal combustion engine including a transmission for transmitting a power from the internal combustion engine, an oil cooler for cooling oil lubricating the transmission and/or a cooling passage for cooling the oil cooler, comprising a shut-off valve for shutting off the cooling passage, wherein the shut-off valve can be controlled so as to stop the flow of the cooling water in the cooling passage if a temperature of catalyst is not greater than its activation temperature, thereby it is possible to promote the activation of the catalyst.

Other objects, features and advantages of the invention will become apparent from the following description of the embodiments of the invention taken in conjunction with the accompanying drawings.

The present invention will be hereinbelow detailed in the form of preferred embodiments with reference to the accompanying drawings in which:

### BRIEF DESCRIPTION OF SEVERAL VIEWS OF THE DRAWING

Fig 1 is a block diagram of the present invention:
Fig. 2 is a conceptual diagram for explaining a cooling loss and a heat radiation for cooling in the present invention;
Fig. 3 is a diagram showing a relationship between an EGR quantity and a cooling loss;
Fig 4 is a diagram showing a relationship between an ignition timing during combustion by spark ignition, and cooling loss;
Fig. 5 is a diagram showing a relationship between a fuel injection timing and a cooling loss during combustion by compression ignition;
Fig. 6 is a diagram showing a relationship between a flow rate of cooling water in an engine, and a heat radiation for cooling;
Fig. 7 is a diagram showing a relationship between a water temperature of cooling water in an engine and a heat radiation for cooling;
Fig. 8 is a control flow-chart for a temperature controller;
Fig. 9 is a view illustrating an engine system of the present invention;
Fig. 10 is a diagram illustrating a control flow-chart in the embodiment shown in Fig. 9;
Fig. 11 is a view illustrating an example of a time-chart in an application of the present invention;
Fig. 12 is a diagram showing a relationship between a desired value of the flow rate of cooling water, and a heat radiation for cooling;
Fig. 13 is a diagram showing a relationship between a desired value of the ignition timing, and a cooling loss;
Fig. 14 is a view illustrating an engine system of the present invention;
Fig. 15 is a control flow-chart in the embodiment shown in Fig. 14;
Fig. 16 is a time-chart during execuation of the control shown in Fig. 15;
Fig. 17 is a view illustrating an engine system of the present invention;
Fig. 18 is a control-flow chart in part in the embodiment shown in Fig. 17; and
Fig. 19 is a time-chart during execution of the control shown in Fig. 15.

### DESCRIPTION OF THE PREFERRED EMBODIMENTS OF THE INVENTION

The present invention will be hereinbelow made of embodiments of the present invention with reference to the accompanying drawings.

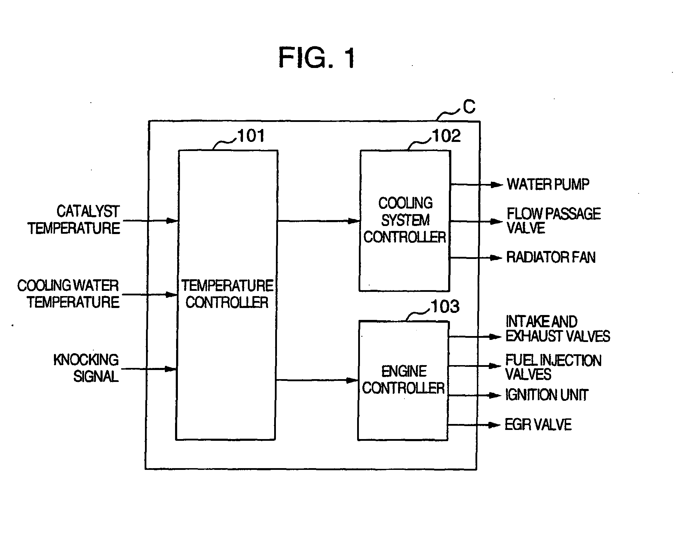

Referring to Fig. 1 which is a block diagram illustrating a control system for an intern combustion engine, in accordance with an embodiment of the present invention, a temperature controller 101 carries out temperature control of the engine and catalyst (which is aim at purifying exhaust gas from the engine) so as to aim for early warm-up of both engine and catalyst during a cold start of the engine.

Signals indicating a temperature of the catalyst, a temperature of cooling water and knocking, which are detected by sensors, are received by the temperature controller 101 which therefore computes a desired heat radiation for cooling, and a desired cooling loss in order to control an engine cooling system. The cooling loss and the heat radiation for cooling will be detailed after the configuration shown in Fig. 1 is briefly explained.

The desired heat radiation for cooling is delivered to a cooling system controller 102 while the desired cooling loss is delivered to an engine controller 103 for controlling the combustion of the engine.

Further, the cooling system controller 102 controls a water pump in the engine cooling water passage, a flow passage control valve, a radiator and the like in accordance with the desired heat radiation for cooling so as to control the value of heat radiation for cooling. Meanwhile, the engine controller 103 controls intake and exhaust valves, a fuel injection valve an ignition unit, an EGR valve and the like in accordance with the desired cooling loss so as to control the cooling loss.

The temperature controller 101, the cooling system controller 102 and the engine controller 103 may be constituted by, for example, a control unit C.

The essential feature of the present invention is the provision of the control of the cooling loss and the heat radiation for cooling in accordance with at least either one of a temperature of the catalyst and a temperature of cooling water, and an object of the present invention is to materialize both early activation of the catalyst and early warm-up of the internal combustion engine.

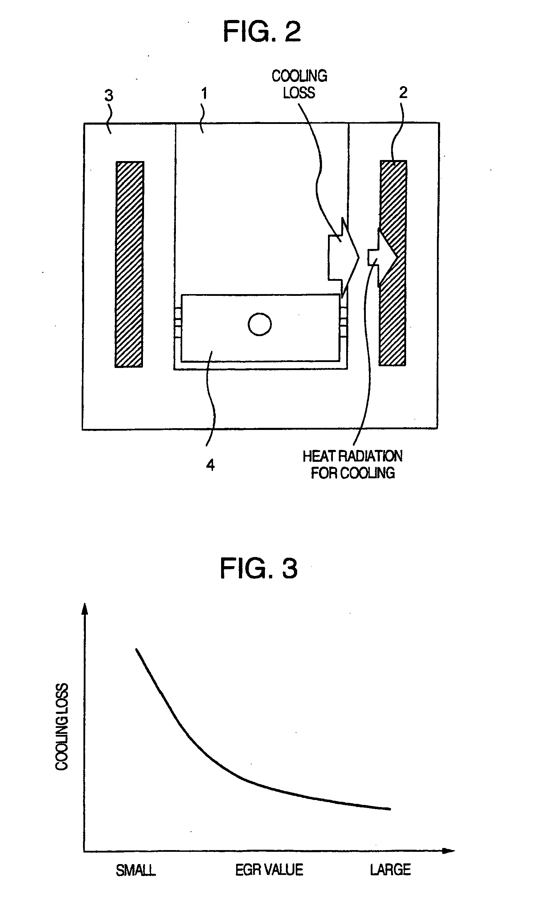

Explanation will be hereinbelow made of the cooling loss and the heat radiation for cooling in detail with reference to Fig. 2 which shows the transmission of heat which is generated from a combustion chamber 1 in the engine and which is then transmitted to cooling water 2.

The cooling loss in the present invention is a heat value with which a heat generated from the combustion gas in the combustion chamber (cylinder) 1 of the engine is transmitted to an engine block 3. The cooling loss relates to an averaged temperature Ta and a temperature to the engine block 2 during engine cycles (intake cycle, compression cycle, expansion cycle and exhaust cycle) carried by a piston 4, and in particular to those during a period from the compression cycle to the exhaust cycle. Thus, it is understood that the cooling loss significantly relates to the combustion. As shown in Fig. 3 which shows, as an example, the relationship between an EGR (exhaust gas recirculation) value and the cooling loss, an increase in the EGR value causes the averaged temperature Ta to lower since a possible maximum combustion temperature is lowered. Thus, the cooling loss can be controlled by adjusting the EGR value through the control of the EGR valve and the intake and exhaust valves.

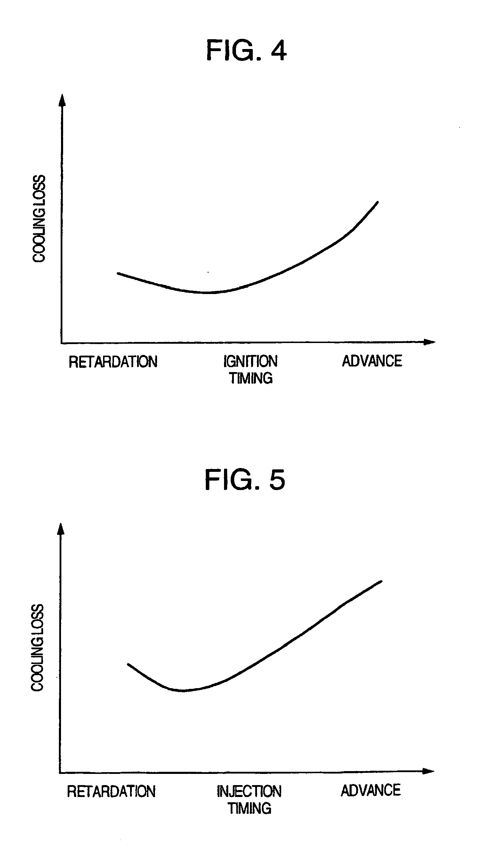

Further, the averaged temperature also relates to an ignition timing, and accordingly, the cooling loss can be controlled by the ignition timing during combustion by spark ignition, as shown in Fig. 4, and it can be controlled by an injection timing during combustion by compression ignition (Diesel combustion or combustion by premix self-ignition), as shown in Fig. 5.

Meanwhile, the heat radiation for cooling, concerned in the present invention, is a heat value transmitted from the engine block 3 to the cooling water 2. The heat radiation for cooling mainly relates to a flow rate and a temperature of the cooling water 2.

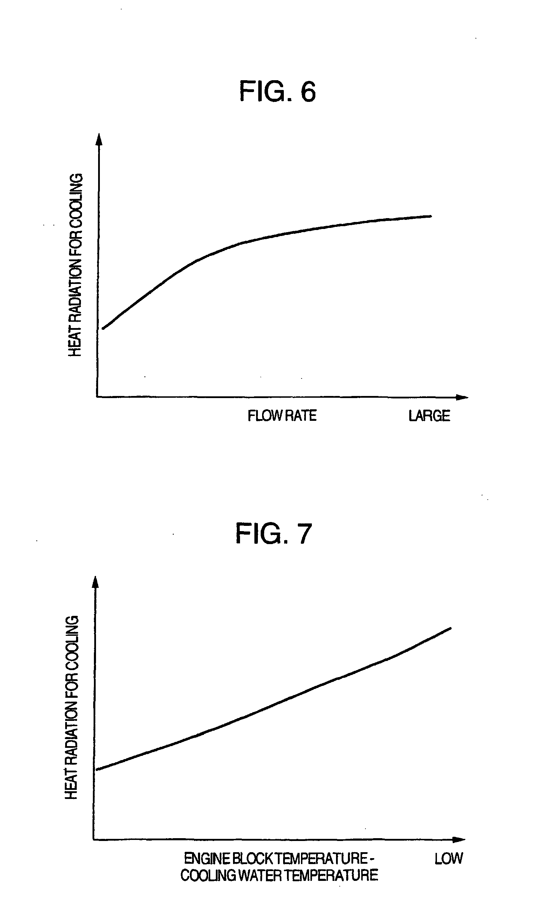

Referring to Fig. 6 which shows an example of the relationship between the flow rate of the cooling water and the heat radiation for cooling, the relationship between the flow rate and the heat radiation for cooling, as shown in Fig. 6, exhibits, the higher the flow rate, the greater the heat radiation for cooling. Further, referring to Fig. 7 which shows a relationship between the temperature of the cooling water and the heat radiation for cooling, if the temperature of the engine block is constant, the lower the temperature of the cooling water, the greater the heat radiation for cooling. Thus, the heat radiation for cooling can be controlled by a discharge quantity of the water pump or by a radiator for radiating a heat from the cooling water into the atmospheric air.

Further, another feature of the present invention, is the provision of the control for the heat radiation for cooling and the cooling loss in accordance with a temperature of the catalyst and a temperature of the cooling water.

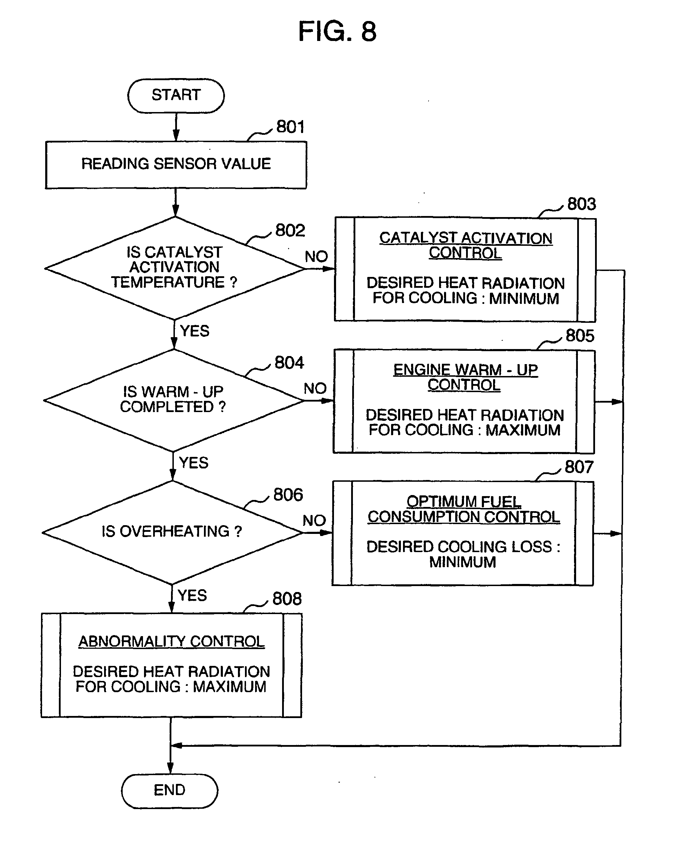

Fig. 8 shows a flow-chart as to the temperature controller 101.

Referring to Fig. 8, at step 801, outputs from a catalyst temperature sensor, a water temperature sensor and the like are transmitted to the controller 101.

At step 802, the catalyst temperature is compared with a catalyst activation temperature at which the catalyst can purify exhaust gas, and if the catalyst temperature is not less than the catalyst activation temperature, step 804 is carried out, but if it is false, step 803 is carried out.

At step 803, a desired heat radiation for cooling is minimized. It is noted here that the minimum desired heat radiation for cooling corresponds to a minimum value in a controllable range. Due to this minimum control of the heat radiation for cooling, the heat value transmitted to the cooling water is decreased while the temperature of exhaust gas is increased so as to enable early warm-up of the catalyst, that is, it is possible to fast raise the temperature of the catalyst up to the activation temperature in comparison with the conventional one. A specific example of the minimum control of the heat radiation for cooling will be described later.

At step 804, whether the temperature of engine cooling water comes up to a warm-up temperature at which the engine can be efficiently operated as usual or not is determined, and if it is true, step 806 is carried out, but if it is false, step 805 is carried out.

At step 805, the desired cooling loss is set to be maximum. As a result, the heat value transmitted to the engine block is increased, and further, since the heat radiation for cooling is minimized, the engine can be warmed up fast in comparison with a conventional one. The maximum control of the heat radiation for cooling will be described later. It is noted here that the maximum of the cooling loss corresponds to a maximum value in a controllable range.

At step 806, whether the water temperature is not lower than an overheat temperature at which there would be a risk of occurrence of seizure of the engine, or not is determined, and if it is true, step 805 is carried out, but if it is false, step 807 is carried out. At step 807, optimum fuel consumption control is carried out and the desired cooling loss is minimized.

It is noted that the desired cooling loss is in a controllable range, and it indicates a position of optimum spark advance (optimum spark ignition timing) as shown in Fig. 4 if the cooling loss is controlled only by the spark ignition timing. This optimum spark ignition timing enables the engine to operate with a high degree of efficiency.

At step 808 at which control is made for an abnormal operation, that is, the desired heat radiation for cooling is maximized so as to carry out cooling of the engine block by the cooling water at a maximum degree in order to prevent occurrence of seizure of the engine.

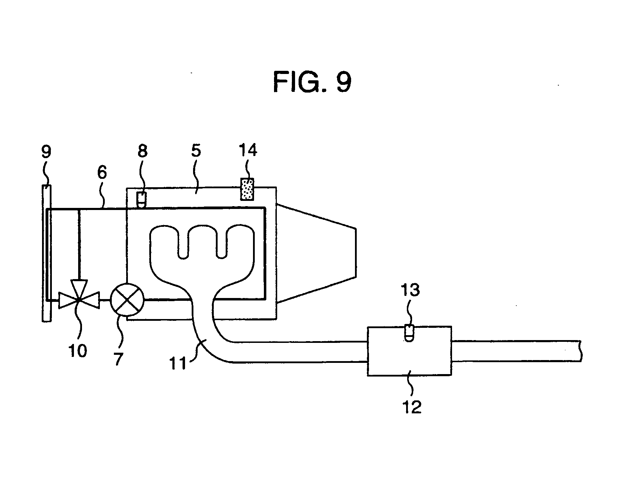

Referring to Figs. 9 to 12, a specific control example in this embodiment will be explained.

Fig. 9 is a view which shows a configuration of the engine in this embodiment.

In this example, a cooling system for an engine 5 is composed of a cooling water circulation passage 6, a water pump 7 for controlling heat radiation for cooling in the cooling system, a water temperature sensor 8 for measuring a temperature of cooling water, a radiator 9 for radiating heat from the cooling water into the atmospheric air, a radiator fan (which is not shown) for controlling the radiation of heat from the radiator into the atmospheric air, and a flow passage change-over valve (thermostat) 10 for introducing cooling water.

Further, catalyst 12 (3 way catalyst) for purifying exhaust gas and a catalyst sensor 13 for detecting a temperature of the catalyst are incorporated in an exhaust pipe 11 of the engine. Further, there is provided a knocking sensor 14 for detecting knocking of the engine.

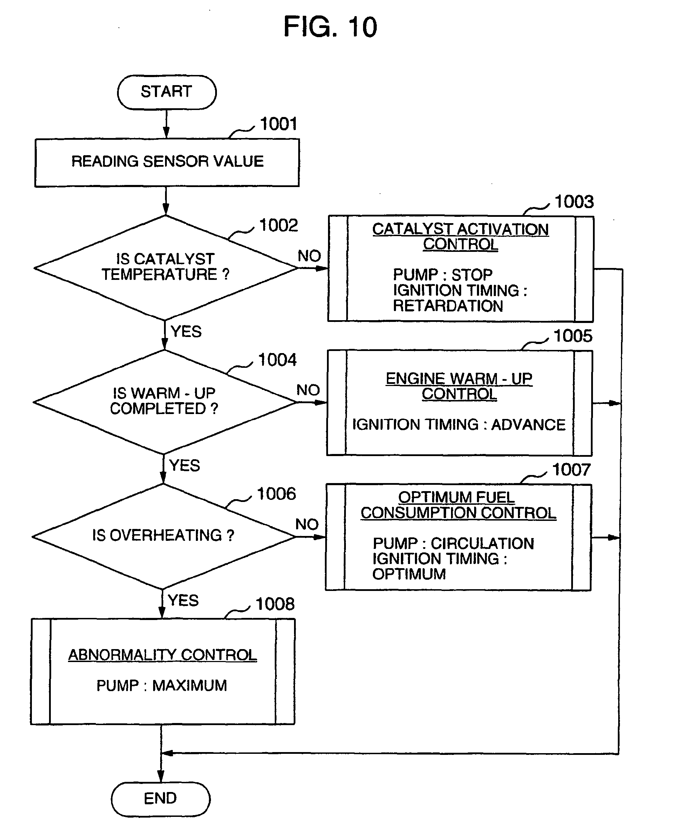

Referring to a flow-chart shown in Fig. 10, explanation will be hereinbelow made of control for early warm-up of both catalyst 12 and engine 5.

At step 1001, outputs from the catalyst temperature sensor 13, the water temperature sensor 8 and the knocking sensor 14 are read.

At step 1002, whether a value detected by the catalyst temperature sensor 13 is not less than the activation temperature of the catalyst or not is determined, and if it is true, step 1004 is carried out, if it is false, step 1003 is carried out.

At step 1003, the water pump 7 is stopped while the ignition timing is retarded in order to fast warm up the catalyst 12. As the water pump 7 is stopped, the heat radiation for cooling to cooling water becomes minimum so as to aim at raising the temperature of the engine 5, and further, the temperature of exhaust gas from the engine is raised through the control of retardation of the ignition timing. As a result, it is possible to aim for early warm-up of the catalyst. It is noted that the retardation of the ignition timing may decrease the cooling loss, as shown in Fig. 4, but may not minimize the cooling loss. Although the cooling loss is minimized at a position where the ignition timing is optimum, but in this case, since efficient combustion is carried out, the temperature of exhaust gas may not be raised as is made through the control of retardation.

At step 1004, whether a value of engine cooling water detected by the water sensor 8 reaches the warm-up temperature of the engine 5 or not is determined, and if it is true, step 1006 is carried out, but if it is false step 1005 is carried out.

At step 1005, in order to warm up the engine 5, the ignition timing is advanced so as to raise the temperature of the engine cylinder. At this time, through the control of the cooling system, the stop and the operation of the water pump 7 are repeated or the discharge rate of the pump 7 is controlled to be minimum although it is operated.

Through the circulation of cooling water at a small rate as mentioned above, it is possible to prevent occurrence of thermal stress in the engine block and knocking due to a hot spot in the engine cylinder.

At step 1006, it is determined that whether a value detected by the water temperature sensor or an estimated value of the temperature of the engine is not less than an overheat temperature at which the seizure of the engine is expected, or not. If it is true, step 1008 is carried out, but if it is false, step 1007 is carried out. At step 1007, control for minimizing the fuel consumption is carried out. Thus, the ignition is controlled at an ignition timing with which the cooling loss is minimized, and the pump is controlled so that the temperature of cooling water becomes not less than the warm-up temperature but not greater than the overheat temperature at which the seizure of the engine occurs.

It is noted that a temperature of the engine is estimated from the cooling loss and the heat radiation for cooling, and if the history of temperature of the engine exhibits an increase while the engine load is high, foreseeing control through which the flow rate of cooling water increases in advance may be carried out. In this foreseeing control, if the history of temperature of the engine exhibits a decrease while the engine load is low, the flow rate of cooling water is decreased in advance, or the circulation of cooling water into the radiator may be stopped.

At step 1008, control upon overheating is carried out, that is, the flow rate of cooling water from the pump 7 and the output of the radiator are maximized so as to increase the heat radiation for cooling in order to prevent occurrence of seizure of the engine. Further, if the temperature is not lowered within a predetermined time after the above-mentioned controlled is carried out, the ignition timing is retarded so as to also decrease the cooling loss. Further, since the overheating is caused by any abnormality in the cooling system including the radiator and the pump, a warning lamp is turned on for indication of requirement for a fault diagnosis.

As to the fault diagnosis, if, for example, a water temperature is higher than an overheat temperature while the engine is operated at an idle speed, the radiator fan is operated being alternately changed over between a highest speed and a lowest speed (including a stop), every predetermined time. At this time, a fault diagnosis for the radiator can be made in accordance with a speed of the radiator fan and a variation in the output of the water temperature sensor. Specifically, a correlation between the speed of the radiator fan and a variation in the output of the water temperature sensor is calculated, and if the thus calculated correlation is small, it can be determined that the radiator or the thermostat fails.

Similarly, by changing over the output of the pump every predetermined time between a high output power and a low output power, it is possible to carry out a fault diagnosis of the pump in accordance with a correlation between a variation in temperature of cooling water and a control input to the pump. Specifically, a correlation between a control input of the pump and a variation in the output of the water temperature sensor is calculated, and if this correlation is small, it can be determined that the pump fails.

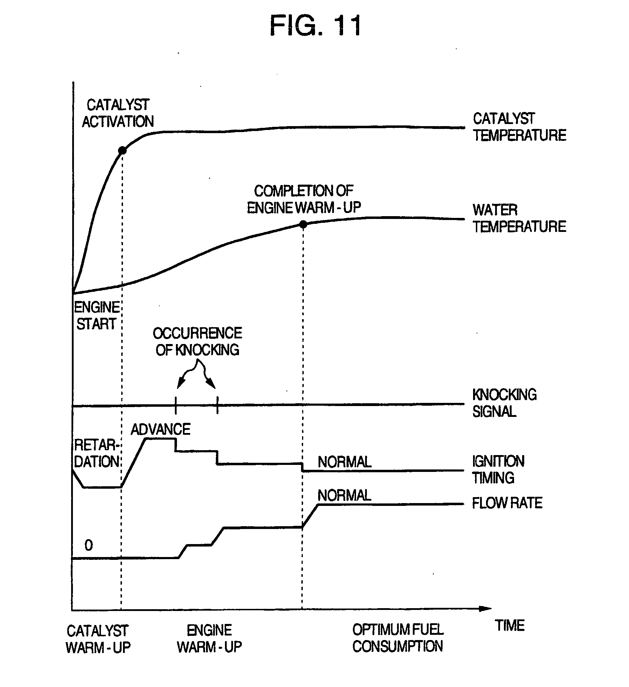

Referring to Fig. 11 which shows an example of a time-chart in the case of execution of the warm-up control for both catalyst and engine, according to the present invention, during warm-up of the catalyst until the temperature of the catalyst comes up to its activation temperature, the ignition timing is retarded, and the pump is stopped so as to set the flow rate to zero. During warm-up of the engine after activation of the catalyst, the ignition timing is advanced, and if knocking is detected, the ignition timing is retarded while the flow rate of the pump is increased in order to prevent occurrence of abnormal combustion.

After completion of the warm-up of the engine, the pump is operated in a steady-state, and also the ignition timing is reset to a normal position.

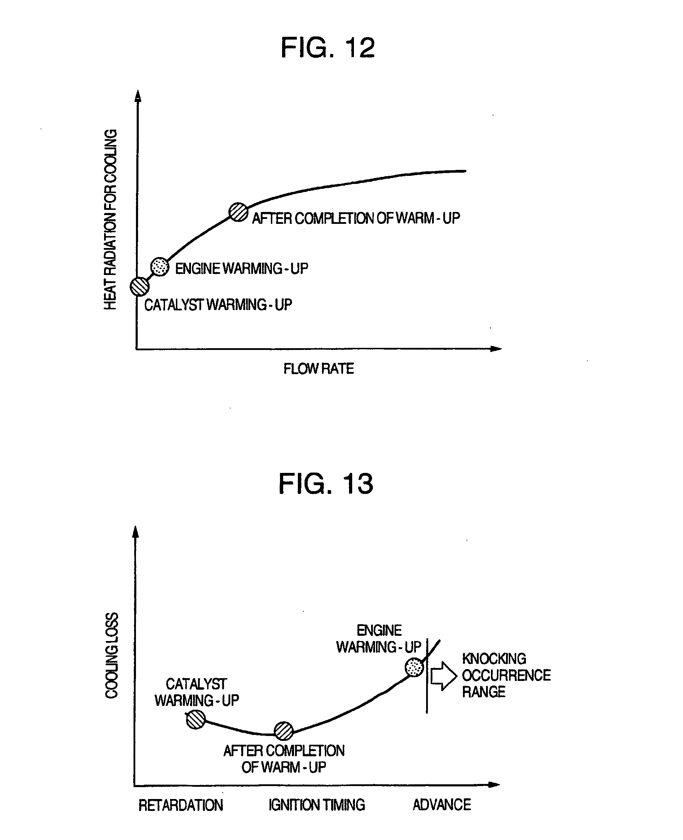

Referring to Fig. 12 which shows control objectives of the flow rate in the control according to the present invention, cooling water is blocked until the warm-up of the catalyst is completed so as to minimize the heat-radiation for cooling, and after completion of the warm-up of the catalyst, the flow rate of cooling water is controlled so as to be low as possible as it can until the warm-up of the engine is completed. After the completion of the warm-up of the engine, the flow rate is controlled in accordance with a value of the heat radiation for cooling, thereby it is possible to optimumly materialize early warm-up of the catalyst and the engine.

Further, referring to Fig. 13 which shows control objectives of the ignition timing in the control according to the present invention, optimum early warm-up can be materialized by retarding the ignition timing at one and the same engine speed during warm-up of the catalyst but by advancing the ignition timing up to a knocking critical value during warm-up of the engine after completion of the warm-up of the catalyst, with respect to a normal ignition timing after completion of the warm-up. That is, if the ignition timing is retarded, after-burning is caused in exhaust gas discharged from the cylinder of the engine, and accordingly, the temperature of the exhaust gas becomes higher, thereby it is possible to aim for early warm-up. At this time, although the cooling loss is small, it is, more or less, greater than that with the normal ignition timing (efficiency drive) after completion of the warm-up.

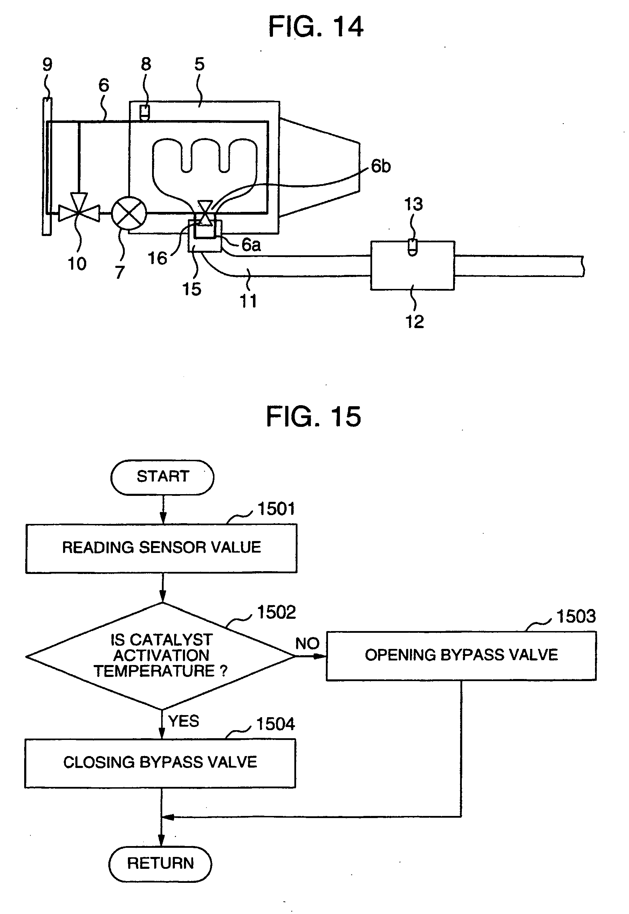

Referring to Figs. 14 to 16, explanation will be hereinbelow made of a second embodiment of the present invention.

Referring to Fig. 14 which shows the configuration of an engine in the second embodiment, this configuration is the same as that shown in Fig. 9, except that there are provided a turbocharger 15 for supercharging the intake air in an exhaust pipe 11, a cooling passage 6a for cooling the turbocharger 15, a bypass passage 6b bypassing the cooling passage 6a, and a bypass valve 16 for blocking the flow in the bypass flow passage 6a.

The cooling passage 6a and the bypass passage 6b are alternately connected to the engine cooling passage 6 through switching control of the bypass valve 16.

Referring to Fig. 15 which is a control flow -chart of the bypass valve 16 in this embodiment, at step 1501, a value from the catalyst temperature sensor 13 is read, and at step 1502, whether the temperature of the catalyst is greater than an activation temperature thereof or not is determined. If it is true, step 1504, the bypass valve 16 is closed (default). Meanwhile, it is false, at step 1503, the bypass valve 16 is opened so as to bypass cooling water flowing through the turbocharger 15 during warm-up of the catalyst.

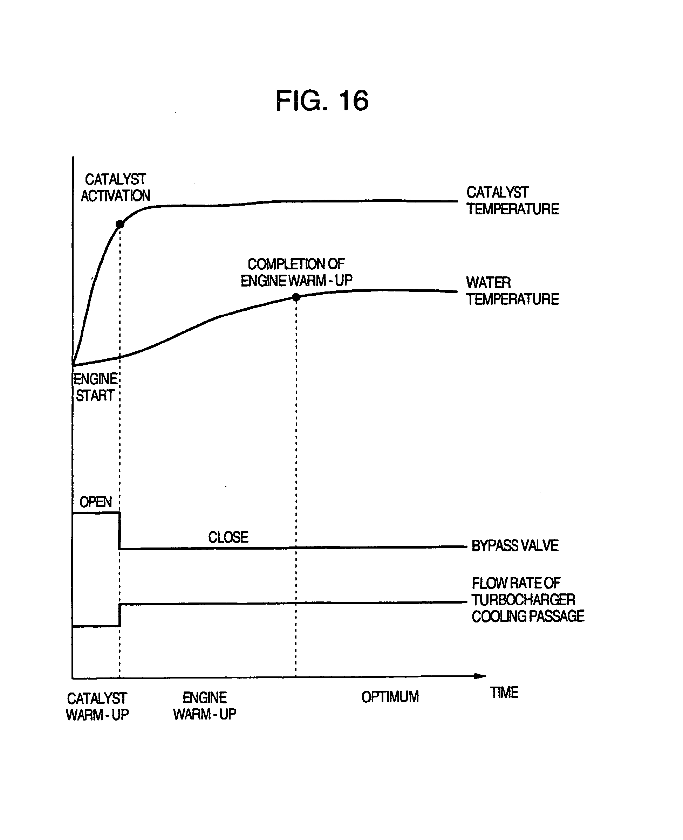

Referring to Fig. 16 which shows a time-chart in the case of execution of the control according to the present invention, during warm-up of the catalyst, by opening the bypass valve 16, the lowering of the temperature of exhaust gas, which is caused when the exhaust gas passes through the turbocharger, can be minimized, thereby it is possible to fast warm-up the catalyst. It is noted that even during warm-up of the engine, if a relief valve for bypassing the flow of exhaust gas flowing into a turbo-turbine is closed, no cooling is required for the turbocharger, and accordingly, the bypass valve 16 may be opened.

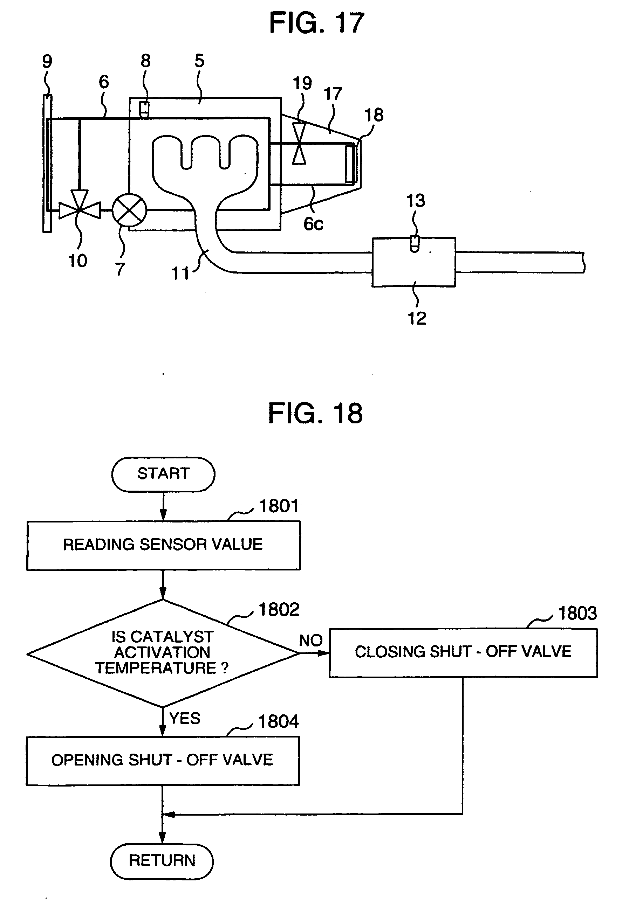

Referring to Fig. 17 which shows a third embodiment of the present invention, the configuration of this embodiment is the same as that shown in Fig. 9, except that there are provided an oil cooler 18 for cooling a transmission 17, a cooling passage 6c for cooling the oil cooler 18 and a shut-of valve 19 for blocking the cooling passage 6c.

Referring to Fig. 18 which shows an control flow-chart of the shut-off valve 19 in this embodiment, at step 1801, a value from the catalyst temperature sensor 13 is read, and at step 1802, whether the catalyst temperature is not less than its activation temperature or not is determined. If it is true, at step 1804, the shut-off valve 19 is opened, but if it is false, at step 1803, the shut-off valve 19 is closed.

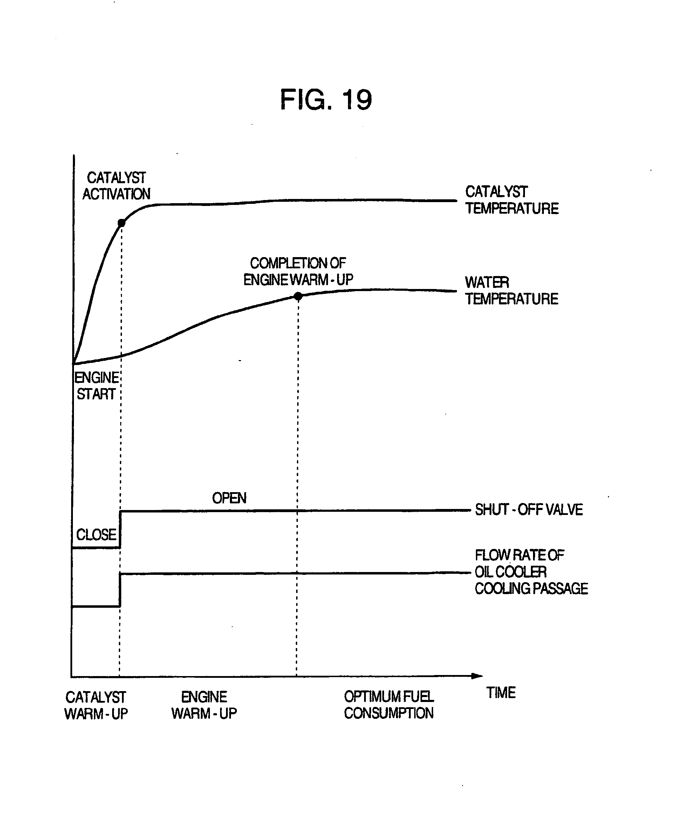

Referring to Fig. 19 which shows a time-chart in the case of execution of the control according to the present invention, during warm-up of the catalyst, The shut-off valve 19 is closed so as to shut-off the flow of cooling water flowing through the oil cooler 18 in order to decrease the heat radiation for cooling, and as a result, the exhaust temperature rises up, thereby it is possible to fast warm up the catalyst.

According to the present invention, by controlling the cooling system in accordance with a catalyst temperature, the catalyst can be fast activated. Further, in combination of the control of the cooling system for the engine or the like with the control of the engine, the warm-up of the catalyst can be made prior to the warm-up of the engine while aiming at warming up both the catalyst and the engine. Thus, with the application of the present invention, it is possible to reduce emission of exhaust gas due to early activation of the catalyst, and to improve the fuel consumption due to early warm-up of the internal combustion engine.

It should be further understood by those skilled in the art that although the foregoing description has been made on embodiments of the invention, the invention is not limited thereto and various changes and modifications may be made without departing the scope of the appended claims.

## Claims

1. A control system for an internal combustion engine incorporating cooling water (2) for cooling the engine (5), a circulation passage (6) for the cooling water (2), a water pump (7) for controlling a flow rate of the cooling water (2) and catalyst (12) for purifying exhaust gas from the engine (5), wherein the cooling loss and the heat radiation for cooling are controlled in such a way that the warm-up of the catalyst (12) is carried out prior to the warm-up of the engine (5) while aiming for early warm-up of both catalyst (12) and engine (5) during a cold start of the engine (5),
**characterized in that**
if the temperature of the catalyst (12) is smaller than an activation temperature,
- control is made in such a way that an ignition timing is retarded from the normal one and
- the water pump (7) is stopped or the flow rate of the cooling water (2) is controlled to be less than the normal one,
if the temperature of the catalyst (12) is higher than the activation temperature,
- control is made in such a way that the ignition timing is advanced from the normal one, until the temperature of the cooling water (2) reaches a warm-up temperature which is a normal operation temperature of the engine (5) and
- the water pump (7) is stopped or the discharge rate of the water pump (7) is controlled to be minimum.

2. A control system for an internal combustion engine as set forth in claim 1,
wherein the control of the cooling loss is carried out by controlling an ignition timing, and the control of the heat radiation for cooling is carried out by controlling a flow rate of engine cooling water (2) by means of a water pump (7), and if a temperature of the catalyst (12) has not yet reached its activation temperature, the ignition timing is retarded under control so as to decrease the cooling loss while a flow rate of the engine cooling water (2) is set to be zero or smaller than a normal flow rate so as to decrease the heat radiation for cooling.

3. A control system for an internal combustion engine as set forth in any one of claims 1 and 2, wherein the cooling loss and the heat radiation for cooling are controlled in accordance with at least either a temperature of engine cooling water (2) or a temperature of the catalyst (12).

4. A control system for an internal combustion engine as set forth in any one of claims 1 to 3, wherein the heat radiation for cooling is controlled so as to be minimum until the temperature of the catalyst (12) comes up to the activation temperature.

5. A control system as set forth in any one of claims 1 to 4, wherein the cooling loss is controlled to be maximum until the internal combustion engine (5) is warmed up after the temperature of the catalyst (12) reaches the activation temperature.

6. A control system for an internal combustion engine as set forth in claim 1, further comprising a knocking sensor (14) for detecting knocking of the internal combustion engine (5), wherein when knocking is detected, the ignition timing is retarded under control, and the water pump (7) is controlled so as to increase the flow rate of the cooling water (2).

7. A control system for an internal combustion engine as set forth in claim 1, wherein the cooling loss is controlled by adjusting the EGR value trough the control of the EGR valve and the intake and exhaust valves.

8. A control system for an internal combustion engine as set forth in claim 1, wherein in a case of an internal combustion engine by compression ignition, the cooling loss is controlled by an injection timing.

## Patentansprüche

1. Steuersystem für Verbrennungsmotor, das Kühlwasser (2) zum Kühlen des Motors (5), einen Umlaufdurchgang (6) für das Kühlwasser (2), eine Wasserpumpe (7) zum Steuern der Fließgeschwindigkeit des Kühlwassers (6) und einen Katalysator (12) zum Reinigen von Abgasen aus dem Motor (5) beinhaltet, wobei der Kühlverlust und die Wärmestrahlung zum Kühlen in einer solchen Weise gesteuert werden, dass das Aufwärmen des Katalysators (12) vor dem Aufwärmen des Motors (5) ausgeführt wird, während bei einem Kaltstart des Motors (5) auf ein frühres Aufwärmen sowohl des Katalysators (12) als auch des Motors (5) abgezielt wird,
**dadurch gekennzeichnet, dass**,
wenn die Temperatur des Katalysators (12) geringer als eine Aktivierungstemperatur ist,
- eine Steuerung so durchgeführt wird, dass der Zündzeitpunkt gegenüber dem normalen verzögert wird und
- die Wasserpumpe (7) gestoppt oder die Fließgeschwindigkeit des Kühlwassers (2) so gesteuert wird, dass sie geringer als die normale ist,
wenn die Temperatur des Katalysators (12) höher als die Aktivierungstemperatur ist,
- eine Steuerung so durchgeführt wird, dass der Zündzeitpunkt gegenüber dem normalen beschleunigt wird, bis die Temperatur des Kühlwassers (2) eine Aufwärmtemperatur erreicht, die eine normale Betriebstemperatur des Motors (5) darstellt, und
- die Wasserpumpe (7) gestoppt oder die Auslassgeschwindigkeit der Wasserpumpe (7) auf ein Minimum gesteuert wird.

2. Steuersystem für einen Verbrennungsmotor nach Anspruch 1, wobei die Steuerung des Kühlverlusts durch Steuern eines Zündzeitpunkts ausgeführt wird und die Steuerung der Wärmestrahlung zum Kühlen durch Steuern der Fließgeschwindigkeit des Motorkühlwassers (2) mittels einer Wasserpumpe (7) ausgeführt wird, und wenn eine Temperatur des Katalysators (12) noch nicht ihre Aktivierungstemperatur erreicht hat, der Zündzeitpunkt unter Steuerung verzögert wird, um den Kühlverlust zu senken, während eine Fließgeschwindigkeit des Motorkühlwassers (2) auf Null oder weniger als eine normale Fließgeschwindigkeit eingestellt wird, um die Wärmestrahlung zum Kühlen zu verringern.

3. Steuersystem für einen Verbrennungsmotor nach irgendeinem der Ansprüche 1 und 2, wobei der Kühlverlust und die Wärmestrahlung zum Kühlen nach Maßgabe von mindestens entweder einer Temperatur des Motorkühlwassers (2) oder einer Temperatur des Katalysators (12) gesteuert werden.

4. Steuersystem für einen Verbrennungsmotor nach irgendeinem der Ansprüche 1 bis 3, wobei die Wärmestrahlung zum Kühlen auf ein Minimum gesteuert wird, bis die Temperatur des Katalysators (12) auf die Aktivierungstemperatur ansteigt.

5. Steuersystem für einen Verbrennungsmotor nach irgendeinem der Ansprüche 1 bis 4, wobei der Kühlverlust auf ein Maximum gesteuert wird, bis der Verbrennungsmotor (5) aufgewärmt ist, nachdem die Temperatur des Katalysators (12) die Aktivierungstemperatur erreicht.

6. Steuersystem für einen Verbrennungsmotor nach Anspruch 1, weiterhin mit einem Klopfsensor (14) zum Erfassen eines Klopfens des Verbrennungsmotors (5), wobei, wenn das Klopfen erfasst wird, der Zündzeitpunkt unter Steuerung verzögert und die Wasserpumpe (7) so gesteuert wird, dass die Fließgeschwindigkeit des Kühlwassers (2) erhöht wird.

7. Steuersystem für einen Verbrennungsmotor nach Anspruch 1, wobei der Kühlverlust durch Einstellen des AGR-Werts durch die Steuerung des AGR-Ventils und der Ansaug- und Ausstoßventile gesteuert wird.

8. Steuersystem für einen Verbrennungsmotor nach Anspruch 1, wobei in einem Fall eines Verbrennungsmotors durch Kompressionszündung der Kühlverlust durch eine Einspritzzeiteinstellung gesteuert wird.

## Revendications

1. Système de commande pour un moteur à combustion interne incorporant une eau de refroidissement (2) pour refroidir le moteur (5), un passage de circulation (6) pour l'eau de refroidissement (2), une pompe à eau (7) pour commander un débit de l'eau de refroidissement (2), et un catalyseur (12) pour purifier le gaz d'échappement du moteur (5), dans lequel la perte de refroidissement et le rayonnement de chaleur pour le refroidissement sont commandés de manière à ce que la montée en température du catalyseur (12) soit réalisée avant la montée en température du moteur (5) tout en visant la montée en température précoce à la fois du catalyseur (12) et du moteur (5) au cours du démarrage à froid du moteur (5),
**caractérisé en ce que**
si la température du catalyseur (12) est inférieure à une température d'activation,
- La commande est réalisée de manière à ce que la programmation de l'allumage soit retardée par rapport à la normale et
- la pompe à eau (7) est arrêtée ou le débit de l'eau de refroidissement (2) est commandé pour être inférieur à la normale,
si la température du catalyseur (12) est supérieure à la température d'activation,
- la commande est réalisée de manière à ce que la programmation de l'allumage soit avancée par rapport à la normale, jusqu'à ce que la température de l'eau de refroidissement (2) atteigne une température de chauffe qui est une température normale de fonctionnement du moteur (5) et
- la pompe à eau (7) est arrêtée ou le taux d'évacuation de la pompe à eau (7) est commandé pour être au minimum.

2. Système de commande pour un moteur à combustion interne comme établi dans la revendication 1, dans lequel la commande de la perte de refroidissement est réalisée en contrôlant la programmation de l'allumage et la commande du rayonnement de chaleur pour le refroidissement est réalisée en contrôlant le débit de l'eau de refroidissement du moteur (2) au moyen d'une pompe à eau (7) et si une température du catalyseur (12) n'a pas encore atteint sa température d'activation, la programmation de l'allumage est retardée sous ce contrôle de manière à diminuer la perte de refroidissement alors qu'un débit de l'eau de refroidissement du moteur (2) est fixé à zéro ou inférieur à un débit normal de manière à réduire le rayonnement de chaleur pour le refroidissement.

3. Système de commande pour un moteur à combustion interne comme établi dans l'une quelconque des revendications 1 et 2, dans lequel la perte de refroidissement et le rayonnement de chaleur pour le refroidissement sont contrôlés selon au moins soit une température de l'eau de refroidissement du moteur (2) soit une température du catalyseur (12).

4. Système de commande pour un moteur à combustion interne comme établi dans l'une quelconque des revendications 1 à 3, dans lequel le rayonnement de chaleur pour le refroidissement est contrôlé pour rester au minimum jusqu'à ce que la température du catalyseur parvienne à la température d'activation.

5. Système de commande pour un moteur à combustion interne comme établi dans l'une quelconque des revendications 1 à 4, dans lequel la perte de refroidissement est contrôlée pour rester au maximum jusqu'à ce que le moteur à combustion interne (5) soit chauffé après que la température du catalyseur (12) a atteint la température d'activation.

6. Système de commande pour un moteur à combustion interne comme établi dans la revendication 1, comprenant en outre un capteur de détonation (14) pour détecter la détonation du moteur à combustion interne (5), dans lequel, quand la détonation est détectée, la programmation de l'allumage est retardée sous contrôle et la pompe à eau (7) est contrôlée pour augmenter le débit de l'eau de refroidissement (2).

7. Système de commande pour un moteur à combustion interne comme établi dans la revendication 1, dans lequel la perte de refroidissement est contrôlée en ajustant la valeur minimale EGR par le contrôle de la vanne EGR et les soupapes d'admission et d'échappement.

8. Système de commande pour un moteur à combustion interne comme établi dans la revendication 1, dans lequel, dans le cas d'un moteur à combustion interne à allumage par compression, la perte de refroidissement est contrôlée par la programmation de l'injection.
